(19) Europäisches Patentamt / European Patent Office / Office européen des brevets

(11) **EP 2 548 847 A1**

## EUROPEAN PATENT APPLICATION
published in accordance with Art. 153(4) EPC

(43) Date of publication:
**23.01.2013 Bulletin 2013/04**

(21) Application number: **11756156.3**

(22) Date of filing: **09.03.2011**

(51) Int Cl.:
*C02F 1/44* (2006.01)    *B01D 61/02* (2006.01)
*B01D 61/06* (2006.01)    *B01D 61/12* (2006.01)

(86) International application number:
**PCT/JP2011/055538**

(87) International publication number:
**WO 2011/114967 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2010 JP 2010057113**

(71) Applicant: **Toray Industries, Inc.
Tokyo, 103-8666 (JP)**

(72) Inventors:
• **TANIGUCHI, Masahide
Otsu-shi
Shiga 520-8558 (JP)**

• **TAKABATAKE, Hiroo
Otsu-shi
Shiga 520-8558 (JP)**
• **MAEDA, Tomohiro
Otsu-shi
Shiga 520-8558 (JP)**

(74) Representative: **Hoefer & Partner
Pilgersheimer Straße 20
81543 München (DE)**

(54) **METHOD FOR PRODUCING FRESH WATER**

(57) The present invention relates to a method for producing fresh water, the method including feeding raw water to a semipermeable membrane to obtain fresh water, in which water having a solute concentration different from that of the raw water is fed and mixed with the raw water according to changes of a flow rate of fresh water of the semipermeable membrane unit and/or operating pressure of the semipermeable membrane unit.

*Fig. 1*

EP 2 548 847 A1

**Description**

TECHNICAL FIELD

The present invention relates to a method for producing fresh water and an apparatus for producing fresh water, using a semipermeable membrane for producing fresh water from several kinds of raw water, such as a combination of seawater and river water, groundwater or treated wastewater. In more detail, it relates to a method for producing fresh water and an apparatus for producing fresh water, using a semipermeable membrane, capable of saving on facility cost and operating cost, in an apparatus for producing fresh water, that produces fresh water from several kinds of raw water.

BACKGROUND ART

With deterioration of water environment that is recently growing into a serious problem, water treatment technology becomes important more ever, and water treatment technology utilizing a separation membrane is very widely applied. In the Middle East at which water resource is extremely poor and thermal resource by oil is very rich, thermal desalination method has conventionally been mainly put into practical use as water treatment technology of seawater desalination. However, in area other than the Middle East, at which thermal resource is not rich, desalination process using a semipermeable membrane (particularly reverse osmosis membrane) having small necessary power is employed, and many plants are built and practically operated in Caribbean ocean islands and the Mediterranean area.

Particularly, in recent years, technology of recovering energy in high efficiency from concentrated drainage having pressure energy generated in desalination is becoming applied, and furthermore, it becomes possible to produce fresh water from seawater by energy recovery technologies.

Desalination facilities using reverse osmosis membranes have an object to constantly obtain generally necessary amount of product water. Therefore, operation in which the number of operation of a semipermeable membrane unit and operating pressure of a semipermeable membrane unit are controlled according to a concentration and a temperature of raw water is performed. Specifically, in the case that concentration of raw water increased, operating pressure is raised to compensate the increase of osmotic pressure, and in the case that a temperature of raw water increased, since water permeability of a semipermeable membrane increased, operating pressure is reduced, thereby maintaining a given amount of product water.

Furthermore, in the case where the amount of product water is tried to maintain as above, quality of product water fluctuates. For example, in the case where a temperature of raw water increases and operating pressure is reduced, water quality gets worse greatly. Furthermore, in the case of recovering energy from concentrated drainage, appropriate pressure range of an energy recovery apparatus is restricted, and there was a problem that in the case where the pressure deviates from the designed pressure point by fluctuation of operating pressure, energy recovery efficiency declined.

In view of the above, to maintain product water quality and operating pressure in a certain range, Patent Document 1 proposes a method in which since water permeability of a semipermeable membrane increases in the case that a temperature of raw water increased, the number of operation of a semipermeable membrane unit is reduced to maintain operating pressure, and the method is put into practical use. However, the method has the problem that when the number of operation is reduced, load per semipermeable membrane area increased, leading to easily cause damage to a membrane. As a method to solve the problem, Patent Document 2 proposes a method in which raw water is mixed with high temperature raw water diverged into a condenser of a power plant from the same raw water to maintain a temperature constant.

On the other hand, fresh water production by a semipermeable membrane using seawater as raw water is excellent in energy as compared with a thermal desalination method. However, since the production is a high pressure process due to high osmotic pressure of seawater, required energy is large as compared with water purification process using river water as raw water. For this reason, fresh water production facilities that purification-treat sewage and wastewater, recover treated water with a semipermeable membrane and reutilize the treated water is recently put into practical use (Non-Patent Document 1). Furthermore, a system of reducing energy cost by using seawater and river water together (Non-Patent Document 2) or using seawater and sewage and wastewater together (Non-Patent Document 3) is proposed.

BACKGROUND ART DOCUMENT

PATENT DOCUMENT

Patent Document 1: JP-A-2001-239134
Patent Document 2: JP-UM-A-4-137795

NON-PATENT DOCUMENT

Non-Patent Document 1: A. J. van Gottberg et al., "World's Largest Membrane-based Water Reuse Project", Proc. IDA World Congress, Bahama, 2003.
Non-Patent Document 2: J. S. S. Chin et al., "Increasing Water Resources through Desalination in Singapore: Planning for Sustainable Future", Proc. IDA World Congress, Dubai, 2009.
Non-Patent Document 3: "Kobelco Eco-Solutions Co., Ltd, and other three companies, model project of Ministry of Economy, Trade and Industry, demonstration trials in Shunan-shi", [on-line], March 5, 2009, Nippon Suido Shinbun Co., [search on July 2, 2009], internet <URL: http://www.suido-gesuido.co.jp/blog/suido/2009/03/post_2780.html>

SUMMARY OF THE INVENTION

PROBLEMS THAT THE INVENTION IS TO SOLVE

An object of the present invention is to provide a method for producing fresh water in low cost, in which in a method for producing fresh water using a semipermeable membrane, that mixes and reutilizes several kinds of raw waters, stabilized product water amount and product water quality can be maintained while reducing facility cost, particularly required specifications to a high pressure pump of a semipermeable membrane and an energy recovery unit of concentrate by suppressing an operation control range small.

MEANS FOR SOLVING THE PROBLEMS

In order to solve the above-mentioned problem, the present invention relates to the following embodiments (1) to (7).

(1) A method for producing fresh water, the method including feeding raw water to a semipermeable membrane to obtain fresh water,
in which water having a solute concentration different from that of the raw water is fed and mixed with the raw water according to changes of a flow rate of fresh water of the semipermeable membrane unit and/or an operating pressure of the semipermeable membrane unit.
(2) A method for producing fresh water, the method including mixing at least two kinds of raw waters having different solute concentrations, followed by feeding to a semipermeable membrane unit, thereby obtaining fresh water,
in which a mixing ratio of the at least two kinds of raw water is controlled according to changes of a flow rate of fresh water obtained with the semipermeable membrane unit and/or an operating pressure of the semipermeable membrane unit.
(3) The method for producing fresh water according to (2), in which the mixing ratio of the at least two kinds of raw water is controlled such that the flow rate of the fresh water of the semipermeable membrane unit and the operating pressure of the semipermeable membrane unit is maintained within a given range.
(4) The method for producing fresh water according to (2) or (3), in which, among the at least two kinds of raw water, at least one kind thereof is seawater, river water, groundwater, sewage, wastewater or treated water thereof.
(5) The method for producing fresh water according to (4), in which the treated water is a filtrate or a concentrate.
(6) The method for producing fresh water according to any one of (1) to (5), in which pressure energy of a concentrate of the semipermeable membrane is recovered using a turbine type or reverse pump type energy recovery apparatus.

ADVANTAGE OF THE INVENTION

According to the present invention, in the method for producing fresh water using a semipermeable membrane in which several kinds of raw water are mixed and utilized, raw water and water having a different concentration are mixed according to a temperature and a concentration of raw water, and the mixing ratio is changed, whereby pressure load variation to a high pressure pump feeding to a semipermeable membrane unit is suppressed, and additionally, energy recovery efficiency can be maintained high, facility cost can be reduced and fresh water can be produced with small energy.

BRIEF DESCRIPTION OF THE DRAWINGS

Fig. 1 is a schematic flow chart showing one embodiment of the method for producing fresh water according to the present invention.

Fig. 2 is a schematic flow chart showing another embodiment of the method for producing fresh water according to the present invention.

Fig. 3 is a schematic flow chart showing further another embodiment of the method for producing fresh water according to the present invention.

Fig. 4 is a schematic flow chart showing further another embodiment of the method for producing fresh water according to the present invention.

MODE FOR CARRYING OUT THE INVENTION

The desirable embodiments of the present invention are described below by reference to the drawings. However, it should be understood that the scope of the present invention is not limited to those.

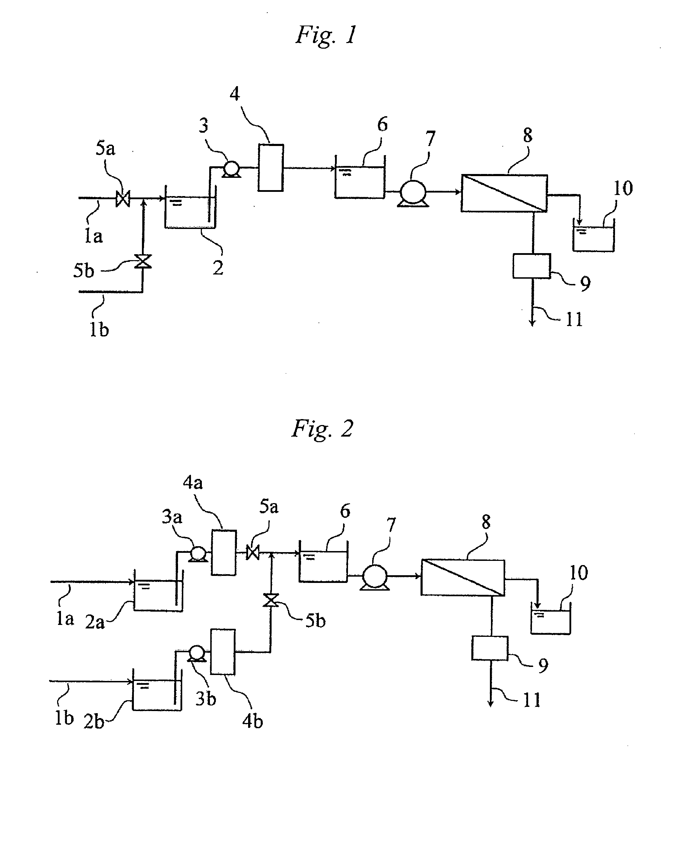

One example of an apparatus for producing fresh water applicable to the present invention is shown in Fig. 1. The apparatus for producing fresh water shown in Fig. 1 has a line that can mix and feed second raw water 1b to first raw water 1a, and the raw water 1b can be mixed with the raw water 1a as necessary. The resulting mixture is then sent to a pre-treatment unit 4 by a raw water feed pump 3 through a raw water tank 2. The pre-treated water is once stored in an intermediate tank 6, and fresh water is obtained through a semipermeable membrane unit 8 by a high pressure pump 7. The fresh water obtained is stored in a fresh water tank 10. On the other hand, a concentrate of the semipermeable membrane unit 8 is power-recovered by an energy recovery unit 9, and then discharged as concentrated drainage 11 outside the system. A valve 5a and a valve 5b are provided to control flow rate of the first raw water 1a and the second raw water 1b, respectively.

Application of the present invention by the apparatus for producing fresh water shown in Fig. 1 is described below.

The first raw water 1a and the second raw water 1b have different concentrations, and a concentration after mixing is adjusted by its mixing ratio. The mixing ratio can fluctuate from 0 to 100% depending on the concentration and temperature. That is, the raw water 1a and the raw water 1b are generally fed alone, and those raw waters may be mixed only when it is necessary. The mixed raw water is passed through a pre-treatment, and then separated into fresh water and a concentrate by a semipermeable membrane unit. Amount and quality of water obtained as fresh water by passing through the semipermeable membrane unit 8 vary depending on a temperature and a concentration of a semipermeable membrane feed water (pre-treated water of mixed raw water). Permeation of a solvent (water) and a solute in the semipermeable membrane is generally expressed by the following equations.

$$Jv = Lp(\Delta P - \pi(Cm)) \qquad (1)$$

$$Js = P(Cm - Cp) \qquad (2)$$

$$(Cm - Cp)/(Cf - Cp) = e \times p(Jv/k) \qquad (3)$$

$$Cp = Js/Jv \qquad (4)$$

$$Lp = \alpha \times Lp_{25} \times \mu_{25}/\mu \qquad (5)$$

$$P = \beta \times P_{25} \times \mu_{25}/\mu \times (273.15 + T)/(298.15) \qquad (6)$$

Cf:        Concentration of semipermeable membrane feed water [mg/l]
Cm:       Concentration on membrane surface of semipermeable membrane feed water [mg/l]
Cp:        Permeate concentration [mg/l]
Js:         Permeation flux of solute [kg/m$^2$/s]
Jv:        Permeation flux of water [m$^3$/m$^2$/s]
k:          Mass transfer coefficient [m/s]
Lp:        Pure water permeability coefficient [m$^3$/m$^2$/Pa/s]
LP$_{25}$:    Pure water permeability coefficient at 25°C [m$^3$/m$^2$/Pa/s]
P:         Solute permeability coefficient [m/s]
P$_{25}$:     Solute permeability coefficient at 25°C [m$^3$/m$^2$/Pa/s]
T:         Temperature [°C]
$\alpha$:        Variation coefficient by operation conditions [-]
$\beta$:        Variation coefficient by operation conditions [-]
$\Delta$P:      Operating pressure [Pa]
$\mu$:        Viscosity [Pa·s]
$\mu_{25}$:     Viscosity at 25°C [Pa·s]
$\pi$:        Osmotic pressure [Pa]

In the formula (1), osmotic pressure $\pi$ increases with increasing a concentration Cm on membrane surface of semipermeable membrane feed water. For example, in the case of a non-ionic substance, the osmotic pressure can logically be calculated by $\pi = Cm/Mw \times R \times (273.15+T)$ (in which Mw is a molecular weight, and R is a gas constant). Furthermore, viscosity $\mu$ of water is increased with decreasing a temperature. The pure water permeability coefficient Lp decreases by those, and the permeation flux Jv of water decreases. When the concentration Cf of semipermeable membrane feed water increases and furthermore, the temperature increases, the permeation flux Js of a solute increases and water quality (concentration of permeation water) Cp of product water is deteriorated.

To address those problems, the operating pressure $\Delta$P has conventionally been raised when the concentration Cf of semipermeable membrane feed water increases and the temperature of water increases. By this, Jv increased and Cp decreased. On the other hand, when the concentration Cf of semipermeable membrane feed water increased and the temperature of water increased, the operating pressure $\Delta$P was reduced.

The operation method of the present invention is characterized in that the operating pressure $\Delta$P is not basically changed, and the concentration Cf of semipermeable membrane feed water is changed by changing the mixing ratio of raw water. That is, when the temperature of raw water decreases, the mixing ratio of raw water is changed so as to reduce the concentration Cf of semipermeable membrane feed water, and the osmotic pressure $\pi$ is reduced to compensate decrease in permeability due to increase in viscosity caused by decrease in temperature with increase in effective pressure ($\Delta$P-$\pi$) by reduction of the osmotic pressure $\pi$, thereby maintaining the operating pressure $\Delta$P constant and maintaining the amount of product water constant.

Furthermore, the concentrate of the semipermeable membrane unit has high pressure energy to such an extent that flow pressure loss (generally about 0.1 to 0.5 MPa) decreases from the operating pressure $\Delta$P in the unit, and close to $\Delta$P. However, an apparatus for recovering pressure energy from this does not have so wide pressure range of high efficiency. For example, even though the recovery efficiency is 80% at 5 MPa, when the pressure is 3 MPa, the recovery efficiency decreases to 50%. For this reason, technology of applying pressure to a permeation side of a semipermeable membrane unit to maintain pressure at a feed water side high, thereby increasing energy recovery efficiency is proposed as described in JP-A-2001-46842. However, a certain extent of energy loss is unavoidable at the time of applying pressure to a permeation side, and the technology leads to the problem that pressure resistance is required in the permeation side. By applying the present invention, energy recovery pressure fluctuation becomes small, and constantly stabilized high energy recovery efficiency can be realized.

Applying the present invention can narrow designed pressure points of a high pressure pump and an energy recovery unit that occupy very large portion in facility cost, and additionally, makes it unnecessary to use an inverter that is a pressure control system of a high pressure pump. This makes it possible to greatly reduce facility cost.

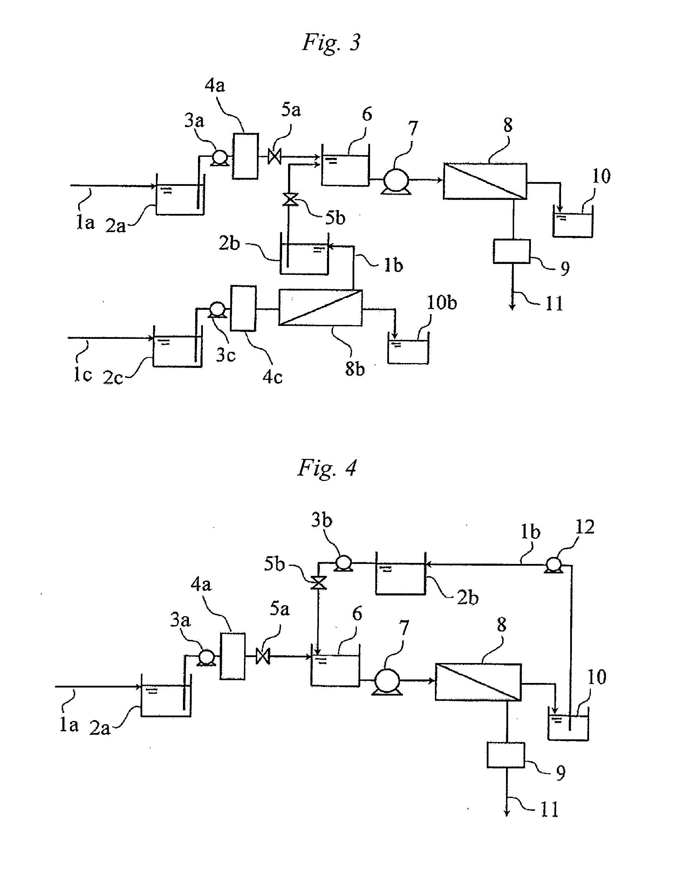

In applying the present invention, the first raw water and the second raw water are not particularly limited so long as concentration affecting osmotic pressure differs. For example, seawater and concentrated seawater, each having high concentration, river water, groundwater, sewage, wastewater, or their treated waters, each having a concentration lower than that of seawater, and treated waters of those can be used. Examples of the treated water include a filtrate and a concentrate. As shown in Fig. 3, when concentrated drainage formed in the semipermeable membrane unit 8b is used as one of raw waters, concentrated drainage generally discharged outside the system can effectively be utilized, and this is effective. In this case, the concentrated drainage may be high concentration raw water and may be low concentration raw water. However, in each case, temperature difference is preferably large from the standpoint of decreasing pressure fluctuation that is the gist of the present invention.

Specifically, for example, temperature change of seawater in the sea around Japan is about from 10 to 30°C, and viscosity in winter (10°C) is about 1.6 times that in summer (30°C). Although depending on characteristics of a semipermeable membrane and operation conditions, in the case that change in characteristics does not occur in the semipermeable membrane, if it is possible to operate at an effective pressure (operating pressure - osmotic pressure) of 5 bars in summer, 8 bars or more of the effective pressure are required in order to obtain the same production water amount in winter. Here, if the osmotic pressure is reduced so as to compensate the increased 3 bars, operating pressure fluctuation can be suppressed. Specifically, for example, if only seawater having TDC (Total Dissolved Solid) concentration of 3.5% (osmotic pressure: about 28 bars) is used as first raw water in summer and river water having TDS concentration of 0.2 wt% is mixed in an amount of about 10% as second raw water in winter, osmotic pressure is reduced to about 25 bars, and the increase of 3 bars in winter can be compensated.

Furthermore, it is preferred that the temperature of the second raw water differs from that of the first raw water, and those raw waters are mixed so as to relax temperature change. That is, for example, cooling water of a power plant and sewage and wastewater having been subjected to biological treatment have a temperature increased by the biological treatment. Therefore, when those waters are mixed as the second raw water in place of river water, temperature decrease in winter is compensated, and a mixing ratio can be reduced. On the other hand, from the standpoint of suppressing temperature increase in summer, when seawater is used as the first raw water and groundwater or underground water is used as the second raw water, temperature increase can be suppressed.

As described above, by applying the present invention, operating pressure of a semipermeable membrane unit can be made constant and load fluctuation to a high pressure pump can be suppressed, and additionally, pressure resistance to piping and the like can be suppressed.

In the case of recovering pressure energy from concentrated drainage of a semipermeable membrane unit using an energy recovery apparatus as described above, the pressure energy recovery apparatus can be operated under the designed optimum pressure or so, and this can contribute to energy saving.

The energy recovery apparatus applied here is not particularly limited, and reverse pump type, turbine type, turbo charger type, pressure exchange type and the like can be used. When a reverse pump having narrow optimum pressure range and Pelton wheel type energy recovery apparatus are used, the present invention is particularly effective.

The semipermeable membrane unit applicable to the present invention is not particularly restricted, but to facilitate handling, a unit produced by putting hollow fiber membrane type or flat membrane type semipermeable membrane in a case to prepare a fluid separation element and mounting the element in a pressure vessel is preferably used. In the case of forming with a flat membrane type semipermeable membrane, the fluid separation element is generally one in which a semipermeable membrane is spirally wound around a cylindrical center pipe having many holes perforated, together with a flow passage material (net), and examples of the commercially available product thereof include reverse osmosis membrane elements TM700 Series and TM800 Series, manufactured by Toray Industries, Inc. Furthermore, one fluid separation element may constitute the semipermeable membrane unit, or a plurality of fluid separation elements may be connected in series or in parallel to constitute a semipermeable membrane unit.

Polymer materials such as a cellulose acetate polymer, polyamide, polyester, polyimide and a vinyl polymer can be used as the material of the semipermeable membrane. The membrane structure may be an asymmetric membrane having a dense layer on at least one surface of the membrane and having micropores having a large pore size gradually toward the inside of the membrane from the dense layer or toward other surface, and may be a composite membrane comprising the asymmetric membrane and very thin functional layer formed by other material on the dense layer of the asymmetric membrane.

In the semipermeable membrane unit, feed water is concentrated. Therefore, a scale inhibitor, an acid and an alkali can be added to the feed water of the respective semipermeable membrane units in order to prevent scale precipitation by concentration and to adjust pH. Addition of the scale inhibitor is preferably carried out at an upstream side than the pH adjustment in order to exert the addition effect. Furthermore, it is preferred that just after addition of chemicals, an inline mixer is provided and an addition port is directly contacted with flow of feed water, thereby preventing rapid change of concentration and pH change near the addition port.

The scale inhibitor is a material that forms a complex together with a metal, metal ions and the like in a solution and solubilizes a metal or a metal salt, and organic or inorganic ionic polymers or monomers can be used. Synthetic polymers such as polyacrylic acid, sulfonated polystyrene, polyacrylamide and polyallylamine, and natural polymers such as carboxymethyl cellulose, chitosan and alginic acid can be used as the organic polymers. Ethylenediaminetetraacetic acid and the like can be used as the monomers. Furthermore, polyphosphate and the like can be used as the inorganic scale inhibitors. Of those scale inhibitors, polyphosphate and ethylenediaminetetraacetic acid (EDTA) are particularly preferably used from the standpoints of easy availability, easy operation such as solubility, and cost. The polyphosphate means a polymerized inorganic phosphoric acid type material having two or more phosphorus atoms in the molecule and bonded by an alkali metal, an alkaline earth metal, a phosphate atom and the like, as represented by sodium hexametaphosphate. Representative examples of the polyphosphate include tetrasodium pyrophosphate, disodium pyrophosphate, sodium tripolyphosphate, sodium tetrapolyphosphate, sodium heptapolyphosphate, sodium decapolyphosphate, sodium metaphosphate, sodium hexametaphosphate and their potassium salts.

On the other hand, sulfuric acid, sodium hydroxide and calcium hydroxide are generally used as the acid and the alkali. Additionally, hydrochloric acid, oxalic acid, potassium hydroxide, sodium bicarbonate, ammonium hydroxide and the like can be used. However, in order to prevent increase of a scale component in seawater, calcium and magnesium are not preferably used.

In the present invention, a treatment unit in which removal of suspended substance and sterilization are conducted according to quality and the like of the respective feed waters can be applied as the pre-treatment unit 4 of feed water before feeding to the semipermeable membrane unit 8.

For example, application of sand filtration, microfiltation membrane and ultrafiltation membrane is effective as the pre-treatment unit 4 in the case that suspended substance in the feed water must be removed. In this case, if many microorganisms such as bacteria and algae are present, a disinfectant is preferably added. Chlorine is preferably used as the disinfectant. For example, a chlorine gas or sodium hypochlorite is added to the feed water in an amount so as to be within a range of from 1 to 5 mg/l as free chorine. The semipermeable membrane may not have chemical durability to a specific disinfectant, depending on the kind of the semipermeable membrane. In such a case, the disinfectant is preferably added at the upstream side of the feed water, and the disinfectant is preferably detoxified near the inlet side of the feed water of the semipermeable membrane. For example, in the case of free chlorine, its concentration is measured, and the addition amount of chlorine gas or sodium hypochlorite is controlled based on the measurement value or a reducing agent such as sodium hydrogen sulfite is added.

In the case that the feed raw water contains bacteria, protein, natural organic components and the like other than the suspended substance, it is effective to add flocculants such as poly-aluminum chloride, aluminum sulfate and iron (III) chloride. The flocculated feed water is then precipitated with a tilted plate, followed by sand filtration or filtration with a microfiltration membrane comprising a plurality of hollow fiber membranes bundled, or an ultrafiltration membrane, whereby feed water suitable for passing through a semipermeable membrane unit in a subsequent stage can be formed. Particularly, in dosing the flocculants, it is preferred to adjust pH so as to be easily flocculated.

In the case of using sand filtration in a pre-treatment, gravity filtration of spontaneous falling system can be applied, and pressure filtration in which a pressure tank is packed with sand can be applied. As the sand packed, single-component sand can be used, but anthracite, silica sand, garnet, pumice stone and the like can be combined therewith to improve filtration efficiency. The microfiltration membrane and the ultrafiltration membrane are not particularly limited, and a flat membrane, a hollow fiber membrane, a tubular membrane, a pleat type and any other shapes can appropriately be used. The material of the membrane is not particularly limited, and polyacrylonitrile, polyphenylene sulfone, polyphenylene sulfide sulfone, polyvinylidene fluoride, polypropylene, polyethylene, polysulfone, polyvinyl alcohol, cellulose acetate, and inorganic materials such as ceramics can be used. The filtration system can use any of a pressure filtration system of filtering feed water under pressure and a suction filtration system of filtering by sucking a permeation side can be applied. Particularly, in the case of a suction filtration system, membrane filtration followed by coagulation and a membrane bio-reactor (MBR), in which a microfiltration membrane or an ultrafiltration membrane is submerged in the coagulation tank or an activated sludge tank, are preferably applied.

On the other hand, in the case that many soluble organic materials are contained in the feed water, those organic materials can be decomposed by the addition of a chlorine gas or sodium chlorite, but can be removed by conducting pressure floatation or activated carbon filtration. In the case that many soluble inorganic materials are contained, a chelating agent such as an organic polyelectrolyte or sodium hexametaphosphate is added, or the inorganic materials are exchanged with soluble ions using an ion-exchange resin or the like. Furthermore, when iron and/or manganese are present in a soluble state, an aeration oxidation filtration method, a contact oxidation filtration method and the like are preferably used.

Nanofiltration membrane can be used before a pre-treatment for the purpose of previously removing specific ions, polymers and the like and operating the fresh water production apparatus in the present invention in high efficiency. In Fig. 1, the treatment is conducted by the pre-treatment unit 4 after mixing the first raw water and the second raw water. However, it is a preferred embodiment that the first raw water and the second raw water before mixing are independently subjected to the suitable pre-treatments, respectively, as shown in Fig. 2.

EXAMPLES

<Reference Example>

Using a fresh water production apparatus showing its flow chart in Fig. 4, seawater (total solute concentration: 3.4 wt%, water temperature: 25°C, pH: 8.0) near Ehime Factory of Toray Industries, Inc. was stored in the first raw water tank 2a, and the seawater was filtered with one hollow fiber membrane module HFU-2020 (effective membrane area: 72 m$^2$), manufactured by Toray Industries, Inc., as the pre-treatment unit 4a at the flow rate of 3 m$^3$/h, and stored in the intermediate tank 6. In this case, the feed valve 5 of the second raw water tank 2b was entirely closed, so that only the first feed water was fed. The seawater was fed at the flow rate of 2 m$^3$/h to the semipermeable membrane unit 8 consisting of 6 reverse osmosis membrane elements TM810 in series, manufactured by Toray Industries, Inc., from the intermediate tank 6, and fresh water was produced at the recovery ratio of 40%. As a result, the amount of fresh water produced was 0.8 m$^3$/h, the operating pressure was 60.3 bars, and TDS concentration of a permeate was 115 mg/l.

<Comparative Example>

The fresh water production apparatus shown in Fig. 4 was operated under the same conditions as in Reference Example, except that seawater temperature is 15°C. As a result, the operating pressure was 71.9 bars, and TDS concentration of the permeate was 73 mg/l. Thus, the operating pressure was increased as compared with that of Reference Example.

<Example>

Fresh water obtained by the semipermeable membrane unit 8 at seawater temperature of 15°C was stored in the raw water tank 2b, and second raw water in the present invention was simulated. 1.6 m$^3$/h of first raw water (pre-treated seawater) pretreated in the same manner as in Reference Example and 0.4 m$^3$/h of the second raw water were mixed (concentration of the mixed water in this case was 2.7 wt%), and fed to the semipermeable membrane unit 8, and the operation was conducted in the same manner as in Reference Example. As a result, the operating pressure was 61.3 bars, and TDS concentration of a permeate was 53 mg/l. Thus, the operation could be conducted under the same pressure as in Reference Example even at low temperature.

Although the present invention has been described in detail and by reference to the specific embodiments, it is apparent to one skilled in the art that various modifications or changes can be made without departing the spirit and scope of the present invention.

This application is based on Japanese Patent Application No. 2010-057113 filed on March 15, 2010, the disclosure of which is incorporated herein by reference.

INDUSTRIAL APPLICABILITY

The object of the present invention relates to a method for producing fresh water and an apparatus for producing fresh water, using a semipermeable membrane that utilizes raw waters such as seawater, river water, groundwater and treated drainage, and can provide a method for producing fresh water in low cost, that can maintain stabilized production water amount and production water quality while reducing facility cost, particularly required specifications to a high pressure pump of a semipermeable membrane and an energy recovery unit of a concentrate by mixing water having different concentrations as necessary, thereby suppressing an operation control range.

DESCRIPTION OF REFERENCE NUMERALS AND SIGNS

| 1a, 1b and 1c: | Raw water |
| --- | --- |
| 2, 2a, 2b and 2c: | Raw water tank |
| 3, 3a, 3b and 3c: | Raw water feed pump |
| 4, 4a, 4b and 4c: | Pre-treatment unit |
| 5a and 5b: | Valve |
| 6: | Intermediate tank |
| 7: | High pressure pump |
| 8: | Semipermeable membrane unit |
| 9: | Energy recovery unit |

10:                     Fresh water tank

11:                     Concentrated drainage

**Claims**

1.  A method for producing fresh water, the method comprising feeding raw water to a semipermeable membrane to obtain fresh water,
    wherein water having a solute concentration different from that of the raw water is fed and mixed with the raw water according to changes of a flow rate of fresh water of the semipermeable membrane unit and/or an operating pressure of the semipermeable membrane unit.

2.  A method for producing fresh water, the method comprising mixing at least two kinds of raw waters having different solute concentrations, followed by feeding to a semipermeable membrane unit, thereby obtaining fresh water,
    wherein a mixing ratio of the at least two kinds of raw waters is controlled according to changes of a flow rate of fresh water of the semipermeable membrane unit and/or an operating pressure of the semipermeable membrane unit.

3.  The method for producing fresh water according to claim 2, wherein the mixing ratio of the at least two kinds of raw water is controlled such that the flow rate of the fresh water of the semipermeable membrane unit and the operating pressure of the semipermeable membrane unit is maintained within a given range.

4.  The method for producing fresh water according to claim 2 or 3, wherein, among the at least two kinds of raw water, at least one kind thereof is seawater, river water, groundwater, sewage, wastewater or treated waters thereof.

5.  The method for producing fresh water according to claim 4, wherein the treated water is a filtrate or a concentrate.

6.  The method for producing fresh water according to any one of claims 1 to 5, wherein pressure energy of a concentrate of the semipermeable membrane is recovered using a turbine type or reverse pump type energy recovery apparatus.

*Fig. 1*

*Fig. 2*

*Fig. 3*

*Fig. 4*

| INTERNATIONAL SEARCH REPORT | | International application No. |
|---|---|---|
| | | PCT/JP2011/055538 |

| A. CLASSIFICATION OF SUBJECT MATTER |
|---|
| $C02F1/44$(2006.01)i, $B01D61/02$(2006.01)i, $B01D61/06$(2006.01)i, $B01D61/12$(2006.01)i |
| According to International Patent Classification (IPC) or to both national classification and IPC |

| B. FIELDS SEARCHED |
|---|
| Minimum documentation searched (classification system followed by classification symbols) |
| C02F1/44, B01D61/00-71/82 |
| Documentation searched other than minimum documentation to the extent that such documents are included in the fields searched |
| Jitsuyo Shinan Koho 1922-1996 Jitsuyo Shinan Toroku Koho 1996-2011 |
| Kokai Jitsuyo Shinan Koho 1971-2011 Toroku Jitsuyo Shinan Koho 1994-2011 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X | JP 2008-126137 A (Meidensha Corp.), | 1-5 |
| Y | 05 June 2008 (05.06.2008), paragraphs [0001], [0023]; fig. 1 (Family: none) | 6 |
| X | JP 2005-224651 A (Toray Industries, Inc.), 25 August 2005 (25.08.2005), claim 1; paragraphs [0012], [0020], [0025], [0028], [0033]; fig. 2 (Family: none) | 1-6 |
| Y | JP 2008-100219 A (Toray Industries, Inc.), 01 May 2008 (01.05.2008), claim 1; paragraph [0059] (Family: none) | 6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 April, 2011 (19.04.11) | 10 May, 2011 (10.05.11) |
| Name and mailing address of the ISA/ | Authorized officer |
| Japanese Patent Office | |
| Facsimile No. | Telephone No. |

Form PCT/ISA/210 (second sheet) (July 2009)

EP 2 548 847 A1

| INTERNATIONAL SEARCH REPORT | International application No. |
|---|---|
| | PCT/JP2011/055538 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2007-152265 A  (Toray Industries, Inc.),<br>21 June 2007 (21.06.2007),<br>paragraph [0032]; fig. 1<br>(Family: none) | 1-6 |

Form PCT/ISA/210 (continuation of second sheet) (July 2009)

13

| **INTERNATIONAL SEARCH REPORT** | International application No. |
|---|---|
| | PCT/JP2011/055538 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The invention in claim 1 is not novel in the light of JP 2008-126137 A.
Consequently, any same or corresponding special technical feature cannot be
found between the invention in claim 1 and the inventions in claims 2 - 10.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001239134 A
- JP 4137795 A
- JP 2001046842 A
- JP 2010057113 A

**Non-patent literature cited in the description**

- **A. J. VAN GOTTBERG et al.** World's Largest Membrane-based Water Reuse Project. *Proc. IDA World Congress,* 2003
- **J. S. S. CHIN et al.** Increasing Water Resources through Desalination in Singapore: Planning for Sustainable Future. *Proc. IDA World Congress,* 2009